# EUROPEAN PATENT APPLICATION

(11) **EP 1 559 731 A1**
(43) Date of publication of application: **03.08.2005**
(21) Application number: 03770057.2
(22) Date of filing: 30.10.2003
(51) Int. Cl.: C08F 290/06, C08G 59/17, B29C 45/16, B44C 1/17

(54) **RESIN COMPOSITION, TRANSFER MATERIAL AND PROCESS FOR PRODUCING SHAPED ITEM**

(30) Priority: 31.10.2002 JP 2002318156
(71) Applicant: Kyoeisha Chemical Co., Ltd., Osaka-shi, Osaka 541-0054 (JP)
(72) Inventor: Mano, Hidesato, Kyoeisha Chemical Co., Ltd., Nara-shi, Nara 630-8453 (JP)
(74) Representative: Nash, David Allan
(86) International application number: PCT/JP2003/013966
(87) International publication number: WO 2004/039856

(57) **Abstract**

A thermosetting and active energy ray curable resin composition is disclosed which contains, as active constituents, a polymer having a (meth)acryl equivalent of 100 to 300 g/eq, a hydroxyl value of 50 to 550 mgKOH/g, an epoxy equivalent of 7000 g/eq or more and a weight-average molecular weight of 5000 to 100000 and a heat-curing agent. A transfer material is also disclosed which includes a protective layer formed of the heat-crosslinking reaction product of the resin composition on a base sheet. A method of producing a molded article is disclosed which includes using the transfer material to form a protective layer.

## Description

### BACKGROUND OF THE INVENTION

### 1. Field of the Invention

The present invention relates to a resin composition, a transfer material and a method for producing a molded article, and more particularly to a thermosetting, active energy ray curable resin composition having wear and abrasion resistance, a postcure-type transfer material using the resin composition, and a method of producing a molded article having excellent wear and abrasion resistance and excellent chemical resistance with use of the transfer material.

### 2. Description of the Background Art

Conventional methods for forming a protective layer on the surface of a molded article include a transfer method of adhering a transfer material having a protective layer formed on a releasable base sheet to the surface of the molded article and thereafter peeling off the releasable base sheet. Another conventional method is to apply the transfer material to the inside of a mold, filling a cavity of the mold with a resin by injection, obtaining a molded resin article by cooling and at the same time adhering the transfer material to the surface of the molded resin article, and then peeling off the releasable base sheet.

The protective layer of the transfer material is generally formed using a thermosetting resin, an active energy ray curable resin, and the like.

However, where the thermosetting resin is used for the protective layer and is cured by heat-crosslinking when the transfer material is produced, the transfer material, after transfer to the molded article, provides poor chemical resistance and poor wear and abrasion resistance to the surface of the molded product.

On the other hand, where the active energy ray curable resin is used for the protective layer and is cured by crosslinking through irradiation with an active energy ray when the transfer material is produced, the chemical resistance and the wear and abrasion resistance can be improved by an increased crosslink density of the resin. However, the protective layer becomes brittle, and at transfer, cracks occur in the protective layer located on curved faces of the molded article.

Another method for using the active energy ray curable resin for the protective layer has been studied. According to this method, an active energy ray curable resin is semicured by a first-stage irradiation with an active energy ray when the transfer material is produced, and then the active energy ray curable resin is completely cured to form the protective layer by irradiation of the molded article with an active energy ray after transfer.

However, because it is difficult to control the dose of the active energy ray and to control the curing reaction, it is very hard to obtain an adequate semicured state of the transfer material.

For solving this problem, an active energy ray curable resin is proposed which contains as active constituents a specific polymer and a multifunctional isocyanate (for example, Japanese Unexamined Patent Publications Nos. H1 0(1998)-58895 and H1 0(1998)-67047). This type of resin achieves an adequate semicured state by an addition reaction of the multifunctional isocyanate with hydroxyl groups of the polymer.

However, even this active energy ray curable resin provides only a short work life as an active energy ray curable resin composition because the reaction of the hydroxyl groups and the multifunctional isocyanate contained therein proceeds at room temperature. Under present circumstances, satisfactory resin compositions and transfer materials have not been realized.

### SUMMARY OF THE INVENTION

In view of the above-described circumstances, an object of the present invention is to provide an active energy ray curable resin composition usable for protective layers of transfer materials that allows molded articles to have superior wear and abrasion resistance and chemical resistance at a low cost, provides an increased work life and does not produce cracks at curved faces of the molded articles at transfer, a transfer material using the resin composition, and a method of producing a molded article using the same.

The present invention provides a thermosetting and active energy ray curable resin composition containing, as active constituents, a polymer having a (meth)acryl equivalent of 100 to 300 g/eq, a hydroxyl value of 50 to 550 mgKOH/g, an epoxy equivalent of 7000 g/eq or more and a weight-average molecular weight of 5000 to 100000, and a heat-curing agent.

The present invention also provides a transfer material including a protective layer formed of a heat-crosslinking reaction product of the resin composition on a releasable base sheet.

The present invention further provides a method of producing a molded article in which, after the transfer material is adhered to the molded article or after the transfer material is applied to the inside of a mold and a cavity of the mold is filled with a resin by injection, and a molded article is formed thereby and the transfer material is simultaneously adhered to a surface of the molded article, the releasable base sheet is removed, and the surface of the molded article is irradiated with an active energy ray, thereby forming a protective layer on the surface of the molded article.

These and other objects of the present application will become more readily apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### DETAILED DESCRIPTION OF THE PREFERRED EMBODIMENT

The resin composition of the present invention comprises a polymer having a (meth)acryl equivalent of 100 to 300 g/eq, a hydroxyl value of 50 to 550 mgKOH/g, an epoxy equivalent of 7000 g/eq or more and a weight-average molecular weight of 5000 to 100000, and a heat-curing agent as active constituents. The term (meth)acryl means acryl or methacryl. The (meth)acryl equivalent may be determined, for example, by a method of reacting the resin composition with a mixture solution of sodium bromide and potassium bromate, then mixing the resulting mixture with a potassium iodide solution and titering the resulting mixture with sodium thiosulfate using a starch solution as an indicator. The hydroxyl value may be determined, for example, by a method of reacting the resin composition with an excess of acetic anhydride in pyridine and titering librated acetic acid with potassium hydroxide. The epoxy equivalent may be determined, for example, by a method of titering a solution of the polymer in acetic acid with a mixture solution of acetic acid and hydrogen bromide. The weight-average molecular weight may be determined by gel permeation chromatography in terms of polystyrene.

The polymer may be a specific blend out of consideration of required physical, chemical properties before and after irradiation with an active energy ray. More particularly, the (meth)acryl equivalent is suitably about 100 to 300g/eq, preferably about 1 50~300g/eq, from the viewpoints of curability by irradiation with the active energy ray, the wear and abrasion resistance after irradiation with the active energy ray, and facility in practical synthesis and the like.

The hydroxyl value of the polymer is suitably about 50 to 550 mg KOH/g, preferably about 100 to 300 mg KOH/g, from the viewpoints of reactivity with the heat-curing agent used, the heat-crosslinking degree when the protective layer of the transfer material is formed, facility in practical synthesis, and the like. If the reactivity with the heat-curing agent is not sufficient or the heat-crosslinking degree is low, it is difficult to overprint layers of the transfer material or roll up the transfer material during production of the transfer material because of remaining tackiness and poor solvent resistance.

The epoxy equivalent of the polymer is suitably 7000 g/eq or more from the viewpoints of polymer stability, coating suitability, curability by irradiation with an active energy ray, wear and abrasion resistance after irradiation with an active energy ray, facility in practical synthesis, and the like. The epoxy equivalent of 7000 g/eq or more means that a few epoxy groups exist in molecules but the polymer does not contain epoxy groups to such an extent that the epoxy groups can contribute to the crosslinking of the polymer. If the epoxy equivalent is too small, the polymer will readily gelate during synthesis and thus make synthesis difficult, and further, the curability by irradiation with the active energy ray and the wear and abrasion resistance after irradiation with the active energy ray will decline.

The weight-average molecular weight of the polymer is suitably about 5000 to 100000, preferably about 5000 to 50000 in polystyrene terms. This is for avoiding difficulties in overprinting and rolling up the transfer material attributed to remaining tackiness and poor solvent resistance during production of the transfer material, for obtaining a clear image layer, for increasing the coating workability of ink, for obtaining a suitable viscosity, and the like.

The polymer described above can be used as a reaction product produced by adding a monocarboxylic acid having an unsaturated double bond to a polymer having epoxy groups. Examples of the polymer having epoxy groups include homopolymers of glycydyl(meth)arcylate, copolymers of glycydyl(meth)acrylate, and a monomer polymerizable therewith, and the like. Examples of the polymerizable monomer include esters of (meth)acrylic acid, (meth)acrylamide, styrene, vinyl acetate, acrylonitrile, and the like. Examples of the monocarboxylic acid having an unsaturated double bone include (meth)acrylic acid, 2-methacryloxyethyl succinate, 2-methacryloxyethyl phthalate, 2-methacryloxyethyl hexahydrophthalate, and the like.

The polymer may also be a reaction product by introducing (meth)acryloyl groups in part of side chains of a polymer containing hydroxyl groups, a reaction product by condensation of an unsaturated polymerizable monomer containing hydroxyl groups with a polymer containing carboxyl groups and a reaction product by adding an unsaturated polymerizable monomer having epoxy groups to a polymer containing carboxyl groups.

Here, examples of the polymer containing hydroxyl groups include (meth)acrylates containing hydroxyl groups, more particularly, homopolymers and copolymers of 2-hydroxyethyl(meth)acrylate, 2-hydroxypropyl(meth)acrylate, 4-hydroxybutyl(meth)acrylate and the like, homopolymers and copolymers of ∈-caprolactone adducts of (meth)acrylates containing hydroxyl groups and the like.

Examples of the polymer containing carboxyl groups include homopolymers and copolymers of (meth)acrylic acid, homopolymers and copolymers of 2-methacryloxyethyl succinate, homopolymers and copolymers of 2-methacryloxyethyl phthalate, homopolymers and copolymers of 2-methacryloxyethyl hexahydrophthalate, and the like.

Examples of the unsaturated polymerizable monomer having hydroxyl groups include the above-mentioned (meth)acrylates containing hydroxyl groups, ∈-caprolactone adducts of these (meth)acrylates, and the like.

Examples of the unsaturated polymerizable monomer having epoxy groups include glycydyl(meth)arcylate, 4-hydroxybutyl(meth)acrylate glycydyl ether, 3,4-epoxycyclohexyl(meth)acrylate, and the like.

The type of monomers and polymers used must be selected or adjusted as appropriate in accordance or conformance with conventionally known methods so that the (meth)acryl equivalent, hydroxyl value, epoxy equivalent and weight-average molecular weight of these polymers fall within the above-defined ranges.

Preferably, the heat-curing agent is one used generally as a crosslinker, but it is not a multifunctional isocyanate. For example, the heat-curing agent may be one or more compounds selected from the group consisting of chelate compounds; metal alkoxides; silane coupling agents and partial hydrolysates thereof; and acid anhydrides. The types of compounds are not particularly limited, and the appropriate compound can be selected from known compounds. It is preferable that these compounds do not contain two or more isocyanate groups and it is more preferable that these compounds do not contain one or more isocyanate groups. From another viewpoint, the heat-curing agent may suitably be a compound having a group or structure reactive with hydroxyl groups and have a functional group other than isocyanate groups. Examples of the function group include alkoxy, alkoxysilyl, acid anhydride groups, and the like. As examples of the structures reactive with hydroxyl group, β-diketone coordinated to metal ions, β-ketoesters and derivatives thereof may be mentioned.

As examples of the chelate compounds, include those containing aluminum, titanium and zirconium. As their ligands, β-diketone, acetylacetone which is a β-ketoester, ethyl acetoacetate and combinations thereof can be suitably used. Specifically, may be mentioned ethylacetoacetate aluminum diisopropylate, aluminum tris(ethylacetoacetate), alkylacetoacetate aluminum diisopropylate, aluminum monoacetylacetonatebis(ethylacetoacetate), aluminum tris(acetylacetonate), diisopropoxybis(acetylacetonate)titanium, di-n-butoxybis(triethanolaminate)titanium, and the like.

Examples of the metal alkoxides include metal alkoides of aluminum, titanium and zirconium. Specifically, aluminum metoxide, aluminum ethoxide, aluminum isopropoxide, aluminum sec-butoxide, titanium ethoxide, titanium isopropoxide, titanium-n-butoxide and the like may be mentioned.

Preferably the silane coupling agents have three or more alkoxy groups in a molecule. Specific examples include tetraethoxysilane, tetraethoxysilane oligomer, tetramethoxysilane, tetramethoxysilane oligomer, methyltrimethoxysilane, ethyltriethoxysilane, methyltriethoxysilane, phenyltriethoxysilane, vinyltrimethoxysilane, vinyltriethoxysilane, γ-glycidoxypropyltrimethoxysilane, γ-glycidoxypropyltriethoxysilane, β-(3,4-epoxycyclohexyl)ethyltrimethoxysilane, γ-methacryloxypropyltrimethoxysilane, γ-aminopropyltriethoxysilane, γ-mercaptopropyltrimethoxysilane, tetraisopropoxysilane, tetra-n-butoxysilane, tetraisopropoxysilane oligomer, tetra-n-butoxysilane oligomers, and the like. These silane coupling agents may be partially hydrolyzed. For hydrolysis, conventionally known methods may be used.

Preferably the acid anhydrides have two or more acid anhydride groups in a molecule. Specific examples include a copolymer of styrene and maleic anhydride, a copolymer of α-olefin and maleic anhydride, pyromellitic anhydride, benzophenonetetracarboxylic anhydride, methylcyclohexenetetracarboxlic anhydride, and the like.

A catalyst may be used for promoting reaction according to the type of the heat-curing agent used. If metal alkoxides or silane coupling agents are used as the heat-curing agent, the catalyst may be alkali metal salts and ammonium salts of carboxylic acids such as sodium acetate and ammonium acetate; chelate compounds of acetylacetone such as aluminum trisacetylacetonate or acetylacetone zirconium; primary, secondary and tertiary amines such as butylamine, hydroxyethylamine, dimethylamine, diethylamine, trimethylamine, triethylamine, dimethylphenylamine and polyalkylene amine; imidazoles such as 2-methylimidazole, 2,4-diethylimidazole, 2-phenylimidazole; metal salts and ammonium salts of perchloric acids such as magnesium perchlorate and ammonium perchlorate; metal salts of ethyl acetoacetate; metal salts coordinated with acetylacetone and ethyl acetoacetate; organometallic salts such as tin octoate and the like. If the acid anhydrides are used as the heat-curing agent, the catalyst may be triphenylphosphin, tertiary amines, quaternary ammonium salts, imidazole compounds, or the like.

Preferably, the polymer and the heat-curing agent are blended in a ratio of 1 : 0.01 to 1 : 0.8, more preferably 1 : 0.05 to 1 : 0.5 (by weight). The catalyst, if used, is suitably within the range of 0.1 to 20 wt% with respect to the total weight of the polymer and the heat-curing agent.

The resin composition of the present invention may contain, as required, a reactive monomer, a solvent, a coloring agent, and the like, in addition to the polymer and the heat-curing agent. If the resin composition is cured by application of an electron beam as the active energy ray, the electron beam can have sufficient effect without use of a photopolymerization initiator. However, if an ultraviolet ray is used as the active energy ray, a photopolymerization initiator and a promoter are preferably added as required.

The reactive monomer is not particularly limited provided that it is susceptible to radical-polymerization. However, the reactive monomer preferably has two or more functional groups susceptible of radical-polymerization in one molecule. Examples of such compounds include esters of (meth)acrylic acid such as neopentylglycol di(meth)acrylate, 1,6-hexanediol di(meth)acrylate, trimethylolpropane tri(meth)acrylate, pentaerythritol tri(meth)acrylate, pentaerythritol tetra(meth)acrylate, dipentaerythritol hexa(meth)acrylate, and the like.

Examples of the solvent include alcohols such as ethanol, isopropanol, butanol, benzyl alcohol and the like; ketones such as acetone, methylethyl ketone, methylisobutyl ketone, cyclohexanone and the like; esters such as ethyl acetate, propyl acetate, butyl acetate and the like; aromatic hydrocarbons such as benzene, toluene, xylene and the like; ethers such as diethyl ether, dioxane, tetrahydrofuran and the like; ether alcohols such as ethoxy ethanol, butoxy ethanol, propylene glycol monemethyl ether, and the like.

The coloring agent is used for preventing the resin from being discolored yellow by irradiation with the active energy ray or the like. Generally a so-called blueing agent can be used. Examples thereof include NICHILON BLUE GL, NICHILON BLUE 3GR (produced by Nissei Kagaku Corporation), and the like.

Examples of the photopolymerization initiator include acetophenone initiators such as 1-hydroxycyclohexyl phenyl ketone, 2-hydroxy-2-methyl-1-phenylpropane-1-one, 2-methyl-1-[4-(methylthio)phenyl]-2-morpholinopropane-1-one, 1-[4-(2-hyroxyethoxy)phenyl]-2-hydroxy-2-methyl-1-propane-1-one and the like; benzoin initiators such as benzoin, 2,2-dimethoxy-1,2-diphenylethane-1-one and the like; benzophenone initiators such as benzophenone, [4-(methylphenylthio)phenyl]phenylmethanone, 4-hydroxybenzophenone, 4-phenylbenzophenone, 3,3',4,4'-tetra(t--butylperoxycarbonyl)benzophenone and the like; thioxanthone initiators such as 2-chlorothioxanthone, 2,4-diethylthioxanthone, and the like.

Examples of the promoter include tertiary amines such as ethyl p-dimethylaminobenzoate, isoamyl p-dimethylaminobenzoate, and the like.

In cases where the resin composition is used for protective layers of transfer materials as described below, a slip additive may preferably be added as required. Thereby, the surface of the protective layer is roughened. Consequently, the transfer material as a sheet not only becomes easy to roll up and improves blocking resistant, but also improves in resistance to abrasion and scratching.

Examples of the slip additive include waxes such as polyethylene wax, paraffin wax, synthetic wax, montan wax, and the like; silicone resins such as polydimethylsiloxane, polyether modified polydimethylsiloxane, and the like; and synthetic resin, i.e., fluoro-polymers such as polymers containing fluoroalkyls group and the like. The slip additive, if used, is suitably added at a ratio of about 0.5 to 15 wt%, preferably about 1 to 6 wt%, with respect to the total weight of the resin composition in consideration of prevention of blocking, improvement in the resistance to abrasion and scratching, transparency of the resin composition itself, and the like.

Further, for the purpose of providing multifunctionality to the protective layer, the resin composition may contain a filler, an antistatic agent, a heat stabilizer, a light stabilizer, an ultraviolet absorber, a near infrared shielding agent, and the like. These matters may be used singly or in combination of two or more thereof according to the function desired to be imparted to the resin composition.

As the filler, an inorganic and/or organic filler can be used, and in particular, an inorganic filler is preferably used.

Examples of the inorganic filler include silicon oxide, titanium oxide, zinc oxide, and the like. These may be in any form such as fine particles, powder, slurry, gel and sol. The use of the filler can prevent blocking and improve the hardness of the protective layer. The larger the particle size of the filler, the more effectively blocking is prevented. The smaller the particle size, the more effectively the hardness can be improved. Accordingly, if the prevention of blocking is desired, the particle size is suitably about several micrometers to several tens of micrometers. If the improvement of the hardness is desired, the particle size is suitably about several micrometers or smaller.

Examples of the antistatic agent include surfactants, electroconductive fillers, electroconductive polymers, ionic compounds, and the like.

The surfactants may be anionic, cationic, nonionic or dipolar-ionic surfactants, but cationic surfactants are preferable.

Examples of the electroconductive fillers include carbon black, antimony oxide, indium oxide, tin oxide, antimony-doped tin oxide (ATO), indium-doped tin oxide (ITO), and the like.

Examples of the electroconductive polymers include electron-conductive polymers such as polypyrrole, polyanion, polyacetylene, polythiophene, and the like, and ion-conductive polymers such as anionic, cationic, dipolar-ionic polymers, and the like. Nonionic polymers having a polyether structure can also be used as antistatic agents.

Examples of ionic compounds include lithium ion salts. In cases where a lithium ion salt is used, a compound having a polyether structure such as polyethylene glycol or the like is preferably used together therewith.

For sufficient antistatic effect, the surface resistance of molded articles is suitably adjusted to about 10⁶ to 10¹² Ω-cm, preferably to about 10⁷ to 10¹¹ Ω-cm.

Examples of the heat stabilizer include hindered phenol antioxidants, phosphorus containing heat stabilizers, sulfur containing heat stabilizers, and the like.

Examples of the light stabilizer include hindered amine light stabilizers and the like.

Examples of the ultraviolet absorbent include benzotriazole, triazine, benzophenone and benzoate ultraviolet absorbents.

Examples of the near infrared shielding agent include organic pigments and dyes that exhibits excellent from shielding from near-infrared rays and coloring agents that absorbs near-infrared rays.

The transfer material of the invention is composed of a protective layer formed of a product of the heat-crosslinking reaction of the above resin composition on a releasable base sheet.

As the releasable base sheet, any sheet ordinarily used for base sheets of transfer materials may be used, such as resin sheets formed polypropylene resins, polyethylene resins, polyamide resins, polyester resins, polyacrylic resins, polyvinyl chloride resins, and the like, aluminum foil, copper foil, glassine paper, coated paper, cellulose sheets formed of cellophane, and the like, and composites thereof. A release layer may be formed on the surface of the base sheet for improving the releasability of the base sheet. The release layer is peeled off together with the base sheet when the base sheet is peeled off after transfer or after simultaneous molding and transfer. The release layer may be formed of, for example, a melamine resin release agent, a silicone release agent, an acrylic resin release agent, a fluoro-polymer release agent, a cellulose derivative release agent, a urea derivative release agent, a polyolefin release agent, a paraffin resin release agent, a composite release agent thereof or the like. The release layer can be formed by coating methods such as gravure coating, roll coating, spray coating, rip coating, comma coating, and the like, and by printing methods such as gravure printing, screen printing, and the like.

The protective layer can be formed by applying the above-described resin composition onto the base sheet by the above-mentioned coating or printing methods and then curing the resin composition. The thickness of the protective layer is generally about 0.5 to 30 µm, preferably about 1 to 6 µm in consideration of wear and abrasion resistance, chemical resistance, costs of protective layer forming materials and sheet breakage. Preferably the protective layer is cured by heating. Thereby, the resin composition turns into a heat-crosslinking reaction product. The crosslinking reaction by heating is easier to control and therefore more advantageous than a crosslinking reaction by irradiation with an active energy ray. Thus, the degree of heat crosslinking can be adjusted as appropriate according to the type of the active energy ray curable resin composition to use, the thickness of the protective layer, the curvature of molded articles, and the like. For example, the heat-crosslinking reaction is suitably carried out within a temperature range of about 100 to 200°C for about 10 to 120 seconds. The resin composition of the invention is not completely crosslinked and cured in the heat-crosslinking reaction stage. That is, the resin composition is semi-cured and tack-free. For this reason, the protective layer can conform to curved faces of molded articles and exhibit flexibility to such an extent that cracks do not occur. That facilitates the overprinting of other layers on the protective layer and the rolling-up of the transfer material.

Multifunctionality may be given to the protective layer as described above, which reduces the number of layers to form, improves the yield of products, and reduces the production costs.

One or more functional layers which are to be transferred with use of the transfer material, for example, an image layer, an adhesive layer, an anchor layer, a low reflection layer, an antistatic layer, an ultraviolet absorbing layer, a near-infrared shielding layer, an electro-magnetic interference sealed layer, and the like may be formed on the protective layer in any order. Among these layers, the adhesive layer may suitably be formed on a surface opposite to the base sheet, and the image layer and the adhesive layer may preferably be formed in this order from a protective layer side. A functional layer may be interposed between the base sheet and the protective layer depending upon the kind of the function layer. The functional layers can be formed of known materials by known methods. For example, it is possible to use the functional layers and their forming methods disclosed in Japanese Unexamined Patent Publications Nos. H10(1998)-58895, H11(1999-123897) and 2002-046207 and International Publication No. W001 /92006.

More particularly, the image layer is usually formed as a printed layer on the protective layer. As a material for the printed layer, a coloring ink is preferably used which contains a pigment or a dye of a desired color as a coloring agent and a resin such as a polyvinyl resin, a polyamide resin, a polyester resin, a polyacrylic resin, a polyurethane resin, a polyvinyl acetal resin, a polyester urethane resin, a cellulose resin, an alkyd resin, or the like as a binder. The image layer can be formed by an ordinary printing process such as offset printing, gravure printing, screen printing, and the like. For multiple color printing and gray-scale printing, offset printing and gravure printing are suitable. For monochrome printing, a coating method such as gravure coating, roll coating, comma coating, rip coating or the like may be adopted. The image layer may be provided entirely or partially on the transfer material according to an image to be expressed. The image layer may also be formed by metal vapor deposition, or the image layer may be formed of a combination of a printed layer and a metal deposition layer.

The adhesive layer is for adhering the above-described layers to the surface of a molded article. The adhesive layer is formed at the locations in the protective layer, the image layer, or the like which are to be adhered to the molded article. More particularly, if the locations to be adhered cover the entire face, the adhesive layer is formed on the entire face. If the locations to be adhered are only parts of the entire face, the adhesive layer is formed partially on the entire face. As the adhesive layer, a heat-sensitive or pressure-sensitive resin suitable for the material of the molded article can be used. For example, if the molded article is formed of a polyacrylic resin, the adhesive layer is preferably formed of an acrylic resin. If the molded article is formed of a polyphenylene oxide·polystyrene resin, a polycarbonate resin, a styrene copolymer resin or a polystyrene blend resin, the adhesive layer is preferably formed of a polyacrylic resin, a polystyrene resin or polyamide resin which is compatible to the resin of the molded article. If the molded article is formed of a polypropylene, it is possible to use a chlorinated polyolefin, a chlorinated ethylene - vinyl acetate copolymer, a cyclized rubber and a coumarone-indene resin. The adhesive layer can be formed using the above-mentioned coating methods, printing methods, and the like. If the protective layer and the image layer have a sufficient adhesive property to the molded article, the adhesive layer may not be provided.

The anchor layer is a resin layer for improving adhesion between layers to be transferred and protecting the molded article and the image layer against chemicals. For example, curable two-pack urethane resins, thermosetting resins such as melamine, epoxy and the like, and thermoplastic resins such as vinyl chloride copolymers and the like can be used. The anchor layer can be formed using the above-mentioned coating methods, printing methods, and the like.

According to a method of producing a molded article of the invention, first, the transfer material is adhered to the surface of the molded article. Alternatively, the transfer material as described above is applied inside a mold for injection molding, and a resin is filled by injection in a cavity of the mold. Thereby the molded article is formed and the transfer material is adhered to the surface of the molded article simultaneously.

In cases where the transfer material is adhered to the surface of the molded article, suitably, the transfer material, preferably its adhesive layer side, is contacted to the molded article, pressure or hot pressure is applied on the base sheet. The base sheet can be pressed or hot-pressed using a transfer apparatus such as a roll transfer apparatus provided with a heat-resistant rubber-form elastic body, for example, silicon rubber, an up-down transfer apparatus or the like. In this case, the pressure is suitably about 5 to 200 kg/cm². Preferably, the surface of the silicon rubber is heated to about 80 to 250°C.

As the mold for injection molding, any one that is usually used for producing molded resin articles can be used. For example, a mold having a pair of halves, i.e., a movable part and a cavity side part, may be mentioned. Using such a mold, the transfer material is put inside the mold, that is, the base sheet is arranged to contact the cavity side part. At this time, transfer materials in the form of sheets may be fed one by one, or required parts of a long transfer material may be fed intermittently. In cases where a long transfer material is used, it is preferable to use a feeder having a registration mechanism so that the image layer, for example, of the transfer material is registered to the mold. Where the transfer material is intermittently fed, if the transfer material is fixed with the movable part and the cavity side part after the position of the transfer material is detected by a sensor, the transfer material can always be fixed at the same position and the image layer, for example, is advantageously not mis-registered. After the mold is closed, a molten resin is injected from a gate provided in the movable part to fill the inside of the mold. Thus, the molded article is formed and at the same time the transfer material is adhered to the surface of the molded article. After the molded resin article is cooled, the mold is opened and the molded resin article is taken out.

Thereafter, the base sheet is peeled off and the surface of the molded article is irradiated with an active energy ray. The resin of the protective layer is thereby completely crosslinked, so that a completely cured protective film is formed on the surface of the molded article. Here, the active energy ray may be applied after the base sheet is peeled off or the base sheet may be peeled off after the active energy ray is applied.

When the base sheet is peeled off, peeling takes place at the interface between the base sheet and the protective layer. In cases where the release layer is formed on the base sheet, peeling takes place at the interface between the release layer and the protective layer when the base sheet is peeled off.

As the active energy ray to be applied, electron beams, ultraviolet rays and the like may be mentioned. The dose of the active energy ray can be adjusted as appropriate according to the kind of the resin composition to be used, the thickness of the protective layer, and the like. For example, the dose may be about 50 to 1000 mJ/cm². The protective layer is thereby formed as the outermost layer of the molded article, and can protect the molded article and the functional layers such as the image layer from chemicals and wear and abrasion.

Here, the molded article is not particularly limited. Examples thereof include word processors, computers, television sets, display panels, a variety of displays such as those of mobile phones, surfaces of polarization plates used for liquid crystal displays, sunglasses made of transparent plastics, spectacle lenses, optical lenses such as finder lenses for cameras, indicators of various types of measuring instruments, window glass for automobiles, trains, and the like.

These molded articles may be molded resin articles, woodwork, composite products thereof, and the like, and may be transparent, translucent or opaque. The molded articles may be colored or may not be colored. The material therefor is not particularly limited so far as it can constitute the above-mentioned surfaces of polarization plates, optical lenses, indicators of measuring instruments, window glass for automobiles, trains, and the like. Examples thereof include general-purpose resins such as polystyrene resins, polyolefin resins, ABS resins, AS resins and AN resins. General-purpose engineering plastics such as polyphenyleneoxide·polystyrene resins, polycarbonate resins, polyacetal resins, acrylic resins, polycarbonate modified polyphenylene ether resins, polyethylene terephthalate resins, polybutylene terephthalate resins and ultra high molecular weight polyethylene resins, super engineering plastics such as polysulfone resins, polyphenylele sulfide resins, polyarylate resins, polyether imide resins, polyimide resins, liquid-crystal polyester resins, polyallyl heat-resistant resins and cycloolefin resins, and the like, can also be used. Further, these resins may form composite resins to which reinforcing agents such as glass fiber, inorganic fillers, and the like are added. These materials may be used singly or in combination of two or more thereof.

### EXAMPLES

The resin composition, transfer material and production method of molded articles of the present invention will now described in detail below by way of example. The terms "part" and "%" in the following description mean parts by weight and percent by weight, respectively. The (meth)acryl equivalent was determined by the method of reacting a polymer with a mixture solution of sodium bromide and potassium bromate, then mixing the resulting mixture with a potassium iodide solution and titering the resulting mixture with sodium thiosulfate using a starch solution as an indicator. The hydroxyl value was determined by the method of reacting a polymer with an excess of acetic anhydride in pyridine and titering librated acetic acid with potassium hydroxide. The epoxy equivalent was determined by the method of titering a solution of a polymer in acetic acid with a mixture solution of acetic acid and hydrogen bromide. The weight-average molecular weight of a polymer was determined by gel permeation chromatography in terms of polystyrene.

### Example 1: Synthesis of a solution A of a thermosetting, active energy ray curable polymer

In a reactor equipped with a stirrer, a cooling tube and a nitrogen introducing tube,
35 parts of glycydyl methacrylate (hereinafter referred to as GMA for simplicity),
1 5 parts of methyl methacrylate (hereinafter referred to as MMA for simplicity),
0.3 parts of dodecyl mercaptan,
1.5 parts of 2,2'-azoisobutyronitrile (hereinafter referred to as AIBN for simplicity) and
200 parts of butyl acetate
were fed. The resulting mixture was heated to 90°C in a nitrogen gas flow in about an hour and maintained at the same temperature for an hour. Subsequently, using a dropping funnel fed beforehand with a mixture liquid of
1 05 parts of GMA,
45 parts of MMA,
0.7 parts of dodecyl mercaptan and
2 parts of AIBN,
the mixture liquid was added dropwise in the reactor in a nitrogen gas flow in about two hours. After maintaining the temperature at 90 °C for three hours, 2 parts of AIBN were fed. The temperature was maintained for an hour. Thereafter the temperature was raised to 120°C and maintained for two hours.

After cooling to 60°C, the nitrogen introducing tube was replaced with an air introducing tube. In the reactor,
71 parts of acrylic acid (hereinafter referred to as AA for simplicity),
0.4 parts of methoquinone and
1 part of triphenyl phosphine
were fed, followed by mixing. The resulting mixture was heated to 110°C and maintained at the same temperature for eight hours under air bubbling. Thereafter, 0.3 parts of methoquinone were added, followed by cooling. Ethyl acetate was added so that a nonvolatile content was 50%. Thus a polymer solution A was obtained.

The polymer contained in the polymer solution had an acryl equivalent of 270 g/eq, a hydroxyl value of 207 mg KOH/g, an epoxy equivalent of 8000 g/eq and a weight-average molecular weight of 2000.

### Example 2: Synthesis of a solution B of a thermosetting, active energy ray curable polymer

A polymer solution B was obtained in the same manner as in Example 1 except that the amount of the monomers used in the initial feeding of Example 1 was changed to 45 parts of GMA and 5 parts of MMA, the amount of the monomers used in the later feeding was changed to 135 parts of GMA and 1 5 parts of MMA and the amount of AA used was changed to 92 parts.

The polymer contained in the obtained polymer solution had an acryl equivalent of 230 g/eq, a hydroxyl value of 240 mg KOH/g, an epoxy equivalent of 10000 g/eq and a weight-average molecular weight of 17000.

### Example 3: Preparation of a thermosetting, active energy ray curable resin composition C

A resin composition C was obtained by mixing
200 parts (containing 100 parts of solids content) of the polymer solution A,
10 parts of aluminum trisacetylacetone and
5 parts of photopolymerization initiator (IRGACURE 1 84 produced by Ciba Specialty Chemicals).

### Example 4: Preparation of a thermosetting, active energy ray curable resin composition D

A resin composition D was obtained by mixing
200 parts (containing 100 parts of solids content) of the polymer solution B,
10 parts of tetraethoxysilane,
10 parts of aluminum trisacetylacetonate and
7 parts of photopolymerization initiator (IRGACURE 1 84).

### Example 5: Production of a transfer material 1

A polyester film of 38 µm thickness was used as a base sheet. A melamine resin release agent was applied in 1 µm thickness on the base sheet by gravure printing to form a release layer.

A protective layer was formed of the resin composition C thereon by gravure printing. The protective layer was 5 µm thick. The protective layer was semi-cured by heating at 1 50°C for 30 seconds. An image layer and an adhesive layer were sequentially formed of an acrylic ink and an acrylic resin, respectively, by gravure printing to obtain a transfer material 1.

### Example 6: Production of a transfer material 2

A transfer material 2 was obtained in the same manner as in Example 5 except that a resin composition D was used as a resin composition, an anchor layer was formed, and a urethane ink was used.

### Example 7: Production of a molded article 1

The transfer material 1 of Example 6 was used and transferred onto the surface of a molded article by use of a simultaneous molding and transfer method. Thereafter the base sheet was peeled off and the protective layer was completely crosslinked and cured by ultraviolet irradiation. The molding conditions were a resin temperature of 240°C, a mold temperature of 55 °C and a resin pressure of about 300 kg/cm². The mold article was formed of an acrylic resin in a tray of 95 mm length, 65 mm width and 4.5 mm height having corners of 2.5 mm radius. The ultraviolet irradiation conditions were 120 W/cm, six lamps, a lamp height of 10 cm and a belt speed of 15 m/minute.

### Example 8: Production of a molded article 2

A molded article 2 was produced in the same manner as in Example 7 except that the transfer material 2 of Example 6 was used, and the ultraviolet irradiation conditions were 120 W/cm, two lamps, a lamp height of 10 cm and a belt speed of 2.5 m/minute.

### Comparative Example 1

A molded article was formed in accordance with Examples 5 and 7 except that the protective layer is formed of a silicon resin by gravure printing, then the protective layer was completely crosslinked and cured by heating when the transfer material was produced and an ultraviolet ray was not applied after transfer.

### Comparative Example 2

A molded article was formed in accordance with Examples 5 and 7 except that a composition of
70 parts of urethane acrylate (UA-306H produced by Kyoeisha Chemical Co., Ltd.)
30 parts of a reactive monomer (LIGHT ACRYLATE TMP-A produced by Kyoeisha Chemical Co., Ltd.) and
5 parts of a photopolymerization initiator (IRGACURE 1 84)
was used for a protective layer, which was formed by gravure printing, then the protective layer was completely cured by ultraviolet irradiation when the transfer material was produced and an ultraviolet ray was not applied after transfer.

The ultraviolet irradiation conditions when the transfer material was produced were 120 W/cm, two lamps, a lamp height of 10 cm and a belt speed of 20 m/minute.

### Comparative Example 3

A thermosetting, active energy ray curable polymer solution E was obtained in the same manner as in Example 1 except that the amount of the monomers used in the initial feeding of Example 1 was changed to 25 parts of GMA and 25 parts of MMA, the amount of the monomers used in the later feeding was changed to 75 parts of GMA and 75 parts of MMA and the amount of AA used was changed to 51 parts. A thermosetting, active energy ray curable resin composition F was obtained in the same manner as in Example 3 except that the polymer solution E was used.

A molded article was formed in accordance with Examples 5 and 7 except that the resin composition F was used for the protective layer.

The polymer had had an acryl equivalent of 350 g/eq, a hydroxyl value of 155 mgKOH/g, an epoxy equivalent of 10000 g/eq and a weight-average molecular weight of 19000.

### Comparative Example 4

A thermosetting, active energy ray curable polymer solution G was obtained in the same manner as in Example 1 except that the amount of AA fed was changed to 67 parts. A thermosetting, active energy ray curable resin composition H was obtained in the same manner as in Example 3 except that the polymer solution G was used.

A molded article was formed in accordance with Examples 5 and 7 except that the resin composition H was used for the protective layer.

The polymer had had an acryl equivalent of 280 g/eq, a hydroxyl value of 190 mgKOH/g, an epoxy equivalent of 6000 g/eq and a weight-average molecular weight of 50000. The polymer was more or less tacky.

### Comparative Example 5

A thermosetting, active energy ray curable polymer solution I was obtained by mixing
200 parts (containing 100 parts of solids content) of the active energy ray curable polymer solution A,
10 parts of a multifunctional isocyanate (Coronate HX produced by Nippon Polyurethane Industry Co., Ltd.) and
5 parts of a photopolymerization initiator (IRGACURE 1 84).

A molded article was formed in accordance with Examples 5 and 7 except that the resin composition I was used for the protective layer.

### Test Examples

Examples 7 and 8 and Comparative Examples 1 to 5 were evaluated on their coating property, presence of cracks, chemical resistance, wear and abrasion resistance, and work life.
1. Coating property: The coating property of the resin compositions was visually judged when the transfer materials were produced. A smooth coating is represented by +, occurrence of a few lines is represented by +/-, and occurrence of lines all over a coating is represented by -.
2. Presence of cracks: Curved faces of the molded articles were observed and visually checked. Nonoccurrence of cracks is represented by +, occurrence of a few cracks is represented by +/-, and occurrence of a considerable number of cracks is represented by -.
3. Chemical resistance: Gauze was impregnated with methanol. The condition of the surface of the molded articles, after reciprocally rubbed with the gauze fifty times, was visually checked. No change is represented by +, slight whitening is represented by +/-, and overall whitening is represented by -.
4. Wear and abrasion resistance: After the surface of the molded articles was rubbed with #0000 steel wool at a load of 100 g/cm² or 300 g/cm² by reciprocal movement of 2 cm distance at a rate of two reciprocal movements per second, the degree of scratches on the surface was visually judged after 10 reciprocal movement. Occurrence of a few scratches is represented by +, occurrence of over ten scratches is represented by +/-, and occurrence of scratches all over the surface is represented by -.
5. Work life: The resin compositions were left in a constant temperature bath at 40°C to measure their work life. The work life was defined as a time period until the viscosity of liquid doubled its initial viscosity.

The obtained results are shown in Table 1.

**Table 1**

| | Coating Property | Cracks | Chemical Resistance | Wear & abrasion Resistance | | Work life |
|---|---|---|---|---|---|---|
| | | | | 100 g/cm² | 300 g/cm² | |
| Example 7 | + | + | + | + | + | 24 hrs. or more |
| Example 8 | + | + | + | + | +/- | 24 hrs. or more |
| Com. Ex. 1 | + | +/- | +/- | +/- | +/- | - |
| Com. Ex. 2 | + | - | + | + | + | - |
| Com. Ex. 3 | + | + | + | - | - | - |
| Com. Ex. 4 | - | + | + | + | +/- | 12 hrs. or less |
| Com. Ex. 5 | + | + | + | + | + | 8 hrs. or less |

Table 1 shows that Examples 7 and 8 were excellent in wear and abrasion resistance and chemical resistance, and did not show occurrence of cracks at the curved faces of the molded articles. In contrast, Comparative Example 1 did not exhibit satisfactory resistance to cracks, wear and abrasion and chemicals. Comparative Example 2 was excellent in wear and abrasion resistance and chemical resistance, but suffered the occurrence of a great number of cracks. Comparative Example 3 did not show occurrence of cracks, but its wear and abrasion resistance was unsatisfactory. Example 3 was poor in wear and abrasion resistance because the acryl equivalent of the polymer contained in the active energy ray curable resin composition exceeded the specified range. Comparative Example 4 was poor in the coating property because its epoxy equivalent was out of the specified range. In addition, the composition of Comparative Example 4 was poor in stability. Comparative Example 5 was poor in stability and its work life was short.

On the other hand, in the transfer materials used in Examples 7 and 8, the resin compositions constituting the protective layer had a work life long enough for practical use.

The present invention provides a resin composition which is given particularly blended ingredients and thereby exhibits excellent wear and abrasion resistance, excellent chemical resistance, and a long work life through two-stage curing.

Therefore, if this resin composition is used for protective layers of transfer materials, the protective layers can be semi-cured by the first curing process, and thus, the transfer materials can be distributed without a decline in quality. In addition, the transfer materials can be used for the manufacture of molded articles. After the transfer materials are adhered to the surface of the molded articles, the protective layer is completely cured by the second curing process. Thus, it is possible to manufacture molded articles having excellent wear and abrasion resistance, chemical resistance, and the like at low cost. In particular, even if the molded articles have complicated curved faces, it is possible to avoid the occurrence of cracks on the curved faces.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. A thermosetting and active energy ray curable resin composition comprising, as active constituents,
a polymer having a (meth)acryl equivalent of 100 to 300 g/eq, a hydroxyl value of 50 to 550 mgKOH/g, an epoxy equivalent of 7000 g/eq or more, and a weight-average molecular weight of 5000 to 100000, and
a heat-curing agent.

2. The resin composition according to claim 1, wherein the polymer is a reaction product of the addition of a monocarboxylic acid having an unsaturated double bond to a polymer having an epoxy group.

3. The resin composition according to claim 2, wherein the polymer having an epoxy group is a homopolymer of glycydyl(meth)arcylate or a co-polymer of glycydyl(meth)arcylate.

4. The resin composition according to claim 1, wherein the heat-curing agent is one or more compounds selected from the group consisting of chelate compounds; metal alkoxides; silane coupling agents and partial hydrolysate thereof; and acid anhydrides.

5. The resin composition according to claim 1, further comprising a photopolymerization initiator.

6. The transfer material comprising a protective layer formed of a heat-crosslinking reaction product of the resin composition as set forth in claim 1 on a releasable base sheet.

7. The transfer material according to claim 6 further comprising an image layer and an adhesive layer in this order on the protective layer.

8. A method of producing a molded article, comprising the steps of:
adhering a transfer material as set forth in claim 6 to a surface of a molded article;
removing the releasable base sheet; and
irradiating the surface of the molded article with an active energy ray, thereby forming a protective layer on the surface of the molded article.

9. A method of producing a molded article, comprising the steps of:
applying a transfer material as set forth in claim 6 to the inside of a mold;
filling a cavity of the mold with a resin by injection to thereby form a molded article and adhering the transfer material to a surface of the molded article simultaneously;
removing the releasable base sheet; and
irradiating the surface of the molded article with an active energy ray to thereby forming a protective layer on the surface of the molded article.
